# EUROPEAN PATENT APPLICATION

(11) **EP 2 615 485 A1**
(43) Date of publication of application: **17.07.2013**
(21) Application number: 11823397.2
(22) Date of filing: 19.08.2011
(51) Int. Cl.: G02B 26/10, B81B 3/00, G02B 26/08

(54) **OSCILLATION MIRROR ELEMENT**

(30) Priority: 07.09.2010 JP 2010199681
(71) Applicant: Funai Electric Co., Ltd., Daito-shi Osaka 574-0013 (JP)
(72) Inventor: KANNO, Isaku, Kyoto-shi Kyoto 606-8501 (JP); INOUE, Naoki, Daito-shi Osaka 574-0013 (JP); MURAYAMA, Manabu, Daito-shi Osaka 574-0013 (JP)
(74) Representative: Grünecker, Kinkeldey, Stockmair & Schwanhäusser
(86) International application number: PCT/JP2011/068782
(87) International publication number: WO 2012/032918

(57) **Abstract**

A vibrating mirror element including a detection electrode to detect driving and capable of being easily manufactured is provided. This vibrating mirror element (100) includes a mirror portion (1) and a driving portion (4, 5) driving the mirror portion, and the driving portion has a drive electrode (44, 54) to deform the driving portion by application of a voltage to drive the driving portion and a detection electrode (45, 55) to detect the amount of deformation of the driving portion, both arranged therein.

## Description

### Technical Field

The present invention relates to a vibrating mirror element, and more particularly, it relates to a vibrating mirror element including a detection electrode to detect the amount of deformation.

### Background Art

In general, a vibrating mirror element including a detection electrode to detect the amount of deformation is known. Such a vibrating mirror element is disclosed in Japanese Patent Laying-Open No. 2009-229517, for example.

In the aforementioned Japanese Patent Laying-Open No. 2009-229517, there is disclosed an actuator (vibrating mirror element) including a swingable mirror, a drive electrode swinging the mirror in a non-contact state by electrostatic force, a torsion bar connected to an end portion of the mirror and being torsionally deformable in response to swinging of the mirror by the drive electrode, and an angle detection sensor. This actuator described in Japanese Patent Laying-Open No. 2009-229517 is so configured that the angle detection sensor detects the amount of deformation due to torsional deformation of the torsion bar and the vibration angle of the mirror is obtained on the basis of this amount of deformation. Furthermore, the angle detection sensor is constituted by piezoresistors integrally formed on a surface of the torsion bar, a pair of voltage measurement pads (detection electrodes) to detect voltages generated in the piezoresistors, and a pair of bias current pads to give bias currents to the piezoresistors. The drive electrode is formed below the mirror in a state of overlapping with a part of the mirror in a plan view.

### Prior Art

### Patent Document

Patent Document 1: Japanese Patent Laying-Open No. 2009-229517

### Summary of the Invention

### Problem to be Solved by the Invention

However, in the actuator described in Patent Laying-Open No. 2009-229517, the drive electrode overlaps with the part of the mirror, and hence there is such a problem that a manufacturing process for integrally forming the piezoresistors or the like of the angle detection sensor on the surface of the torsion bar is required separately from a manufacturing process for forming the drive electrode in a process for manufacturing the actuator.

The present invention has been proposed in order to solve the aforementioned problem, and an object of the present invention is to provide a vibrating mirror element including a detection electrode to detect driving and capable of being easily manufactured.

### Means for Solving the Problem and Effects of the Invention

A vibrating mirror element according to an aspect of the present invention includes a mirror portion and a driving portion driving the mirror portion, while the driving portion has a drive electrode to deform the driving portion by application of a voltage to drive the driving portion and a detection electrode to detect the amount of deformation of the driving portion, both arranged therein.

In the vibrating mirror element according to the aspect of the present invention, as hereinabove described, the drive electrode and the detection electrode are arranged in the driving portion, whereby the drive electrode and the detection electrode can be formed in the same manufacturing process. Thus, it is not necessary to form the drive electrode and the detection electrode in different manufacturing processes, and hence the vibrating mirror element including the detection electrode to detect driving of the driving portion can be easily manufactured.

Preferably in the aforementioned vibrating mirror element according to the aspect, the detection electrode is formed to extend along the longitudinal direction of the drive electrode. According to this structure, the detection electrode can easily detect deformation of the driving portion along the longitudinal direction of the drive electrode.

Preferably in this case, the length of the detection electrode in the longitudinal direction is at least half the length of the drive electrode in the longitudinal direction. According to this structure, the detection electrode can be sized to be capable of accurately detecting the amount of deformation of the driving portion, and hence the amount of deformation of the driving portion can be accurately detected. As a result of deep studies, the inventor has found that the amount of deformation of the driving portion can be accurately detected even if the length of the detection electrode in the longitudinal direction is half the length of the drive electrode in the longitudinal direction.

Preferably in the aforementioned vibrating mirror element having the detection electrode formed to extend along the longitudinal direction of the drive electrode, the length of the detection electrode in the longitudinal direction is less than the length of the drive electrode in the longitudinal direction. According to this structure, excessive increase in the proportion of the detection electrode in the driving portion can be suppressed, and hence reduction in the driving force of the driving portion caused by reduction in the proportion of the drive electrode in the driving portion can be suppressed.

Preferably in the aforementioned vibrating mirror element according to the aspect, the drive electrode and the detection electrode are arranged in a state insulated from each other. According to this structure, failure of accurate detection of the amount of deformation of the driving portion by the detection electrode caused by an unexpected short circuit or the like between the drive electrode and the detection electrode can be suppressed.

Preferably in the aforementioned vibrating mirror element according to the aspect, the detection electrode is configured to be deformed following deformation of the driving portion. According to this structure, the detection electrode deformed following the deformation of the driving portion can reliably detect the deformation of the driving portion without impeding the deformation of the driving portion.

Preferably in the aforementioned vibrating mirror element according to the aspect, the detection electrode is arranged in the vicinity of a first side surface of the driving portion opposite to the mirror portion. According to this structure, the detection electrode can be easily connected to an external terminal through the vicinity of the first side surface opposite to the mirror portion.

Preferably in this case, the driving portion is formed to extend linearly along the longitudinal direction of the driving portion on the first side surface and is configured to be inclined to the side of the first side surface from the center of the driving portion in the longitudinal direction toward both end portions thereof on a second side surface of the driving portion on the side of the mirror portion, and the detection electrode is formed to extend linearly along the longitudinal direction of the driving portion. According to this structure, the width of the driving portion in a short-side direction can be gradually reduced from the center toward both end portions by inclining the second side surface of the driving portion to the side of the first side surface in a state where the length of the detection electrode in the longitudinal direction is not too small. Thus, the driving portion can be reduced in weight by reducing the plane area of the driving portion in a state where the length (dimension) of the detection electrode is maintained at a length (dimension) capable of detecting the amount of deformation of the driving portion.

Preferably in the aforementioned mirror element according to the aspect, the detection electrode extends along the longitudinal direction of the drive electrode, and the drive electrode and the detection electrode both are formed to be substantially symmetrical about a straight line passing through a center in the longitudinal direction and extending in a short-side direction. According to this structure, the drive electrode formed to be substantially symmetrical about the straight line can deform the driving portion to be substantially symmetrical about the straight line. Furthermore, the detection electrode formed to be substantially symmetrical about the straight line can more accurately detect the amount of deformation of the driving portion.

Preferably in the aforementioned vibrating mirror element according to the aspect, the driving portion includes a fixed end located nearly in the center of the driving portion in a longitudinal direction and a pair of free ends located in both end portions of the driving portion in the longitudinal direction, the driving portion is configured to be concavely and convexly torsionally-deformable so that the pair of free ends are displaced in a direction perpendicular to a surface of the driving portion with respect to the fixed end, and the detection electrode is configured to detect the amount of deformation of the driving portion based on concave and convex torsional-deformation of the driving portion. According to this structure, the detection electrode can easily detect the amount of deformation of the driving portion based on the concave and convex torsional-deformation.

Preferably in the aforementioned vibrating mirror element according to the aspect, the drive electrode and the detection electrode are coplanar. According to this structure, the drive electrode and the detection electrode can be more easily formed simultaneously through the same manufacturing process, and hence the vibrating mirror element can be more easily manufactured.

Preferably in this case, the drive electrode and the detection electrode are formed by patterning the same metal layer. According to this structure, the drive electrode and the detection electrode can be formed in a short time through a single step.

Preferably in the aforementioned vibrating mirror element having the drive electrode and the detection electrode being coplanar, the drive electrode is arranged to surround the circumference of the detection electrode in a state separated from the outer periphery of the detection electrode. According to this structure, deformation of the drive electrode can be reliably transmitted to the detection electrode surrounded by the drive electrode while the drive electrode is physically insulated from the detection electrode along the outer periphery of the detection electrode.

Preferably in the aforementioned vibrating mirror element having the drive electrode and the detection electrode being coplanar, the driving portion includes a common piezoelectric body and a common electrode arranged on a first surface of the common piezoelectric body, the drive electrode is arranged in a first region on a second surface of the common piezoelectric body while the detection electrode is arranged in a second region different from the first region on the second surface of the common piezoelectric body, the driving portion is so configure that the common piezoelectric body is deformed by applying a voltage between the common electrode and the drive electrode, and the detection electrode is configured to detect a difference in potential from the common electrode generated by deformation of the common piezoelectric body. According to this structure, the drive electrode and the detection electrode can share the common piezoelectric body and the common electrode, and hence it is not necessary to provide piezoelectric bodies and electrodes individually in the drive electrode and the detection electrode. Thus, the structure of the vibrating mirror element can be simplified, and the vibrating mirror element can be downsized. In addition, manufacturing processes for individually providing piezoelectric bodies and electrodes corresponding to the drive electrode and the detection electrode, respectively, are not required, and hence the vibrating mirror element can be more easily formed.

Preferably in the aforementioned vibrating mirror element according to the aspect, the driving portion includes a drive piezoelectric body deformed by applying a voltage to the drive electrode and a detection piezoelectric body deformed following deformation of the drive piezoelectric body, and the detection electrode is configured to detect a voltage generated by deformation of the detection piezoelectric body. According to this structure, the drive piezoelectric body corresponding to the drive electrode and the detection piezoelectric body corresponding to the detection electrode can be separated from each other, dissimilarly to a case where the drive electrode and the detection electrode share one piezoelectric body. Thus, the drive piezoelectric body and the drive electrode can be easily sized to be capable of generating prescribed driving power. Furthermore, the detection piezoelectric body and the detection electrode can be easily sized to be capable of accurately detecting the amount of deformation of the driving portion.

Preferably in this case, the drive electrode is arranged over a substantially entire region of a surface of the drive piezoelectric body, and the detection electrode is arranged over a substantially entire region of a surface of the detection piezoelectric body. According to this structure, a voltage is applied to the substantially entire region of the drive piezoelectric body from the drive electrode formed over the substantially entire region of the surface of the drive piezoelectric body, so that the drive piezoelectric body can be effectively deformed. Thus, reduction in the driving force of the driving portion can be further suppressed. In addition, the detection electrode formed over the substantially entire region of the surface of the detection piezoelectric body can accurately detect the amount of deformation of the driving portion on the basis of a substantially entire deformed portion of the driving portion.

Preferably in the aforementioned vibrating mirror element having the driving portion including the drive piezoelectric body and the detection piezoelectric body, the driving portion is provided with a driving section having the drive piezoelectric body and the drive electrode and a detecting section having the detection piezoelectric body and the detection electrode, and the detecting section is arranged on a surface of the driving section. According to this structure, the detecting section arranged on the surface of the driving section can easily detect deformation of the driving section.

Preferably in the aforementioned vibrating mirror element according to the aspect, the driving portion includes a first driving portion where a first drive electrode and a first detection electrode are arranged and a second driving portion where a second drive electrode and a second detection electrode are arranged, and the first drive electrode and the second drive electrode are configured to have lengths substantially equal to each other in a longitudinal direction while the first detection electrode and the second detection electrode are configured to have lengths substantially equal to each other in the longitudinal direction. According to this structure, the amount of deformation of the first driving portion and the amount of deformation of the second driving portion with respect to the magnitudes of applied voltages can be rendered substantially equal to each other, and the detection accuracy of the first detection electrode and the detection accuracy of the second detection electrode can be rendered substantially equal to each other. Thus, deformation of the first driving portion and deformation of the second driving portion can be detected with substantially the same detection accuracies by the first detection electrode and the second detection electrode, respectively while the first drive electrode and the second drive electrode, the sizes of which are substantially equal to each other, stably drive the mirror portion.

Preferably in this case, the vibrating mirror element further includes a pair of first beam portions having first end portions connected to both sides of the mirror portion, respectively and supporting the mirror portion and a pair of second beam portions connected to second end portions of the pair of first beam portions, respectively and having first ends connected to the first driving portion and second ends connected to the second driving portion, and deformation of the first driving portion and the second driving portion is transmitted through the pair of first beam portions and the pair of second beam portions to incline the mirror portion. According to this structure, the mirror portion can be reliably inclined by the first driving portion and the second driving portion through the pair of first beam portions and the pair of second beam portions.

Preferably in the aforementioned vibrating mirror element according to the aspect, the mirror portion and the driving portion are integrally formed. According to this structure, the mirror portion and the driving portion can be easily formed. Furthermore, driving force based on deformation of the driving portion can be reliably transmitted to the mirror portion.

### Brief Description of the Drawings

[Fig. 1] A perspective view showing the structure of a vibrating mirror element according to a first embodiment of the present invention.
[Fig. 2] A plan view showing the structure of the vibrating mirror element according to the first embodiment of the present invention.
[Fig. 3] An enlarged sectional view taken along the line 900-900 of the vibrating mirror element shown in Fig. 2.
[Fig. 4] An enlarged sectional view taken along the line 910-910 of the vibrating mirror element shown in Fig. 2.
[Fig. 5] An enlarged sectional view taken along the line 920-920 of the vibrating mirror element shown in Fig. 2.
[Fig. 6] A perspective view showing a state where the vibrating mirror element according to the first embodiment of the present invention is inclined at a prescribed inclination angle.
[Fig. 7] A plan view showing a cantilever employed for detection sensitivity measurement performed to confirm effects of the present invention.
[Fig. 8] A diagram for illustrating the detection sensitivity measurement performed to confirm the effects of the present invention.
[Fig. 9] A table showing results of the detection sensitivity measurement performed to confirm the effects of the present invention.
[Fig. 10] A graph showing the results of the detection sensitivity measurement performed to confirm the effects of the present invention.
[Fig. 11] A plan view (top plan view) showing the structure of a vibrating mirror element according to a second embodiment of the present invention.
[Fig. 12] An enlarged sectional view taken along the line 930-930 of the vibrating mirror element shown in Fig. 11.
[Fig. 13] A plan view (bottom plan view) showing the structure of a vibrating mirror element according to a third embodiment of the present invention.
[Fig. 14] An enlarged sectional view taken along the line 940-940 of the vibrating mirror element shown in Fig. 13.
[Fig. 15] A plan view showing the structure of a vibrating mirror element according to a first modification of the present invention.
[Fig. 16] A plan view showing the structure of a vibrating mirror element according to a second modification of the present invention.
[Fig. 17] A plan view showing the structure of a vibrating mirror element according to a third modification of the present invention.
[Fig. 18] A plan view showing the structure of a vibrating mirror element according to a fourth modification of the present invention.

### Modes for Carrying Out the Invention

Embodiments embodying the present invention are now described on the basis of the drawings.

### (First Embodiment)

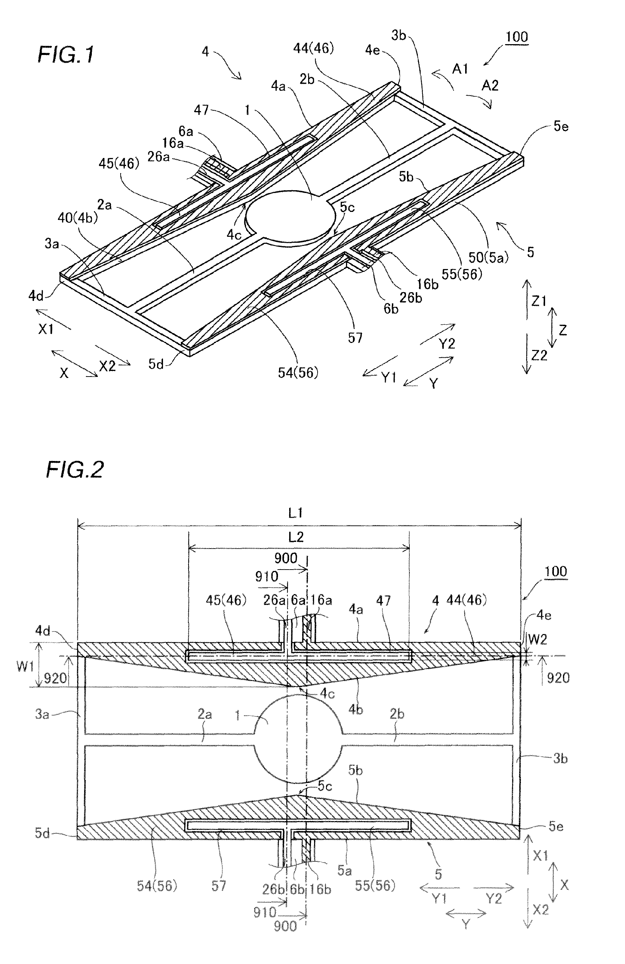

First, the structure of a vibrating mirror element 100 according to an embodiment of the present invention is described with reference to Figs. 1 to 6.

The vibrating mirror element 100 according to the first embodiment of the present invention includes a mirror portion 1, torsion bars 2a and 2b, bars 3a and 3b, driving portions 4 and 5, and fixed portions 6a and 6b, as shown in Figs. 1 and 2. The mirror portion 1, the torsion bars 2a and 2b, the bars 3a and 3b, a base portion 40 (see Fig. 1) of the driving portion 4, a base portion 50 (see Fig. 1) of the driving portion 5, and the fixed portions 6a and 6b are integrally formed from the same Si substrate. The vibrating mirror element 100 is large in a longitudinal direction (direction Y) and small in a short-side direction (direction X). The torsion bars 2a and 2b are examples of the "first beam portion" in the present invention, and the bars 3a and 3b are examples of the "second beam portion" in the present invention. The driving portions 4 and 5 are examples of the "first driving portion" and the "second driving portion" in the present invention, respectively.

The mirror portion 1 is substantially circularly formed and is configured to be capable of reflecting light. The torsion bars 2a and 2b both are formed to extend in the longitudinal direction (direction Y) of the vibrating mirror element 100. A first end portion (Y2 side) of the torsion bar 2a in the direction Y is connected to the mirror portion 1, and a second end portion (Y1 side) thereof in the direction Y is connected to the bar 3a. A first end portion (Y1 side) of the torsion bar 2b in the direction Y is connected to the mirror portion 1, and a second end portion (Y2 side) thereof in the direction Y is connected to the bar 3b.

The bar 3a is formed to extend in the short-side direction (direction X) of the vibrating mirror element 100 on a Y1 side, and the bar 3b is formed to extend in the direction X on a Y2 side. A first end portion (X1 side) of the bar 3a in the direction X is connected to the base portion 40 (driving portion 4), and a second end portion (X2 side) thereof in the direction X is connected to the base portion 50 (driving portion 5). A first end portion (X1 side) of the bar 3b in the direction X is connected to the base portion 40 (driving portion 4), and a second end portion (X2 side) thereof in the direction X is connected to the base portion 50 (driving portion 5). These bars 3a and 3b are configured to be inclinable in the direction X and torsionally deformable by deformation of the base portions 40 and 50 (driving portions 4 and 5).

The mirror portion 1 is inclined in a direction A1 and a direction A2 (see Fig. 1) by the torsion bars 2a and 2b and is supported by the torsionally deformable torsion bars 2a and 2b to be vibratile. Thus, the vibrating mirror element 100 is so configured that deformation of the driving portions 4 and 5 is transmitted through the bars 3a and 3b and the torsion bars 2a and 2b to incline the mirror portion 1.

The torsion bars 2a and 2b are configured to be resonatable with the mirror portion 1. Thus, the mirror portion 1 is configured to be inclined by resonance in excess of the inclination angle of the bars 3a and 3b. As a result, the mirror portion 1 is so configured that, when a laser beam or the like is applied to the mirror portion 1, the reflection angle of reflected light varies with the inclination angle of the mirror portion 1. Thus, the vibrating mirror element 100 can scan a laser beam or the like in a prescribed direction.

As shown in Fig. 2, the driving portions 4 and 5 each have a length L1 and are formed to extend in the longitudinal direction (direction Y). A side surface portion 4a of the driving portion 4 on an X1 side is formed to extend linearly along the direction Y, and a side surface portion 5a of the driving portion 5 on an X2 side is formed to extend linearly along the direction Y. The side surface portions 4a and 5a are examples of the "first side surface" in the present invention.

On the other hand, a side surface portion 4b of the driving portion 4 on the X2 side is continuously inclined to the X1 side from a central portion 4c toward an end portion 4d on the Y1 side and an end portion 4e on the Y2 side, whereby the width thereof in the short-side direction (direction X) is formed to be decreased. Furthermore, a side surface portion 5b of the driving portion 5 on the X1 side is continuously inclined to the X2 side from a central portion 5c toward an end portion 5d on the Y1 side and an end portion 5e on the Y2 side, whereby the width thereof in the short-side direction (direction X) is formed to be decreased. The driving portions 4 and 5 each have a width W1 in the direction X in the central portion 4c of the driving portion 4 or the central portion 5c of the driving portion 5. The side surface portions 4b and 5b are examples of the "second side surface" in the present invention, and the central portions 4c and 5c are examples of the "center" in the present invention.

The end portion 4d of the driving portion 4 on the Y1 side is connected to an end portion of the bar 3a on the X1 side, and the end portion 4e thereof on the Y2 side is connected to an end portion of the bar 3b on the X1 side. The end portion 5d of the driving portion 5 on the Y1 side is connected to an end portion of the bar 3a on the X2 side, and the end portion 5e thereof on the Y2 side is connected to an end portion of the bar 3b on the X2 side.

The fixed portion 6a protruding to the X1 side is formed on the side surface portion 4a on the X1 side in the central portion 4c of the driving portion 4. The fixed portion 6b protruding to the X1 side is formed on the side surface portion 5a on the X2 side in the central portion 5c of the driving portion 5. These fixed portions 6a and 6b are fixed to unshown bases with an ultraviolet curing adhesive or the like and are configured to function as fixed ends when the driving portions 4 and 5 are concavely or convexly deformed to vibrate.

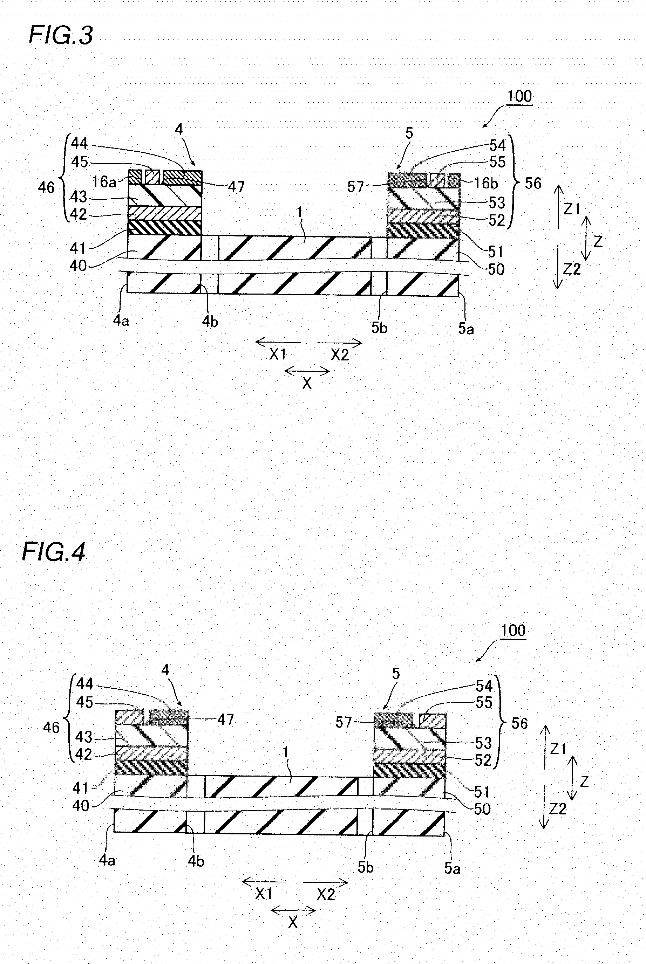

As shown in Figs. 3 to 5, the driving portion 4 includes the base portion 40 and an insulating layer 41. The driving portion 4 further includes a piezoelectric element 46 constituted by a lower electrode 42, a piezoelectric body layer 43, a drive electrode 44, and a detection electrode 45. The driving portion 5 includes the base portion 50 and an insulating layer 51. The driving portion 5 further includes a piezoelectric element 56 constituted by a lower electrode 52, a piezoelectric body layer 53, a drive electrode 54, and a detection electrode 55. The lower electrodes 42 and 52 are examples of the "common electrode" in the present invention, and the piezoelectric body layers 43 and 53 are examples of the "common piezoelectric body" in the present invention. The drive electrodes 44 and 54 are examples of the "first drive electrode" and the "second drive electrode" in the present invention, respectively, and the detection electrodes 45 and 55 are examples of the "first detection electrode" and the "second detection electrode" in the present invention, respectively.

Specifically, the insulating layers 41 and 51 are formed on the substantially entire upper surface (Z1 side) of the base portion 40 and the substantially entire upper surface of the base portion 50, respectively. These insulating layers 41 and 51 both are made of SiO₂. Furthermore, the lower electrodes 42 and 52 are formed on the substantially entire upper surface of the insulating layer 41 and the substantially entire upper surface of the insulating layer 51, respectively. These lower electrodes 42 and 52 both are made of Pt and are electrically connected to external portions by unshown terminals, respectively.

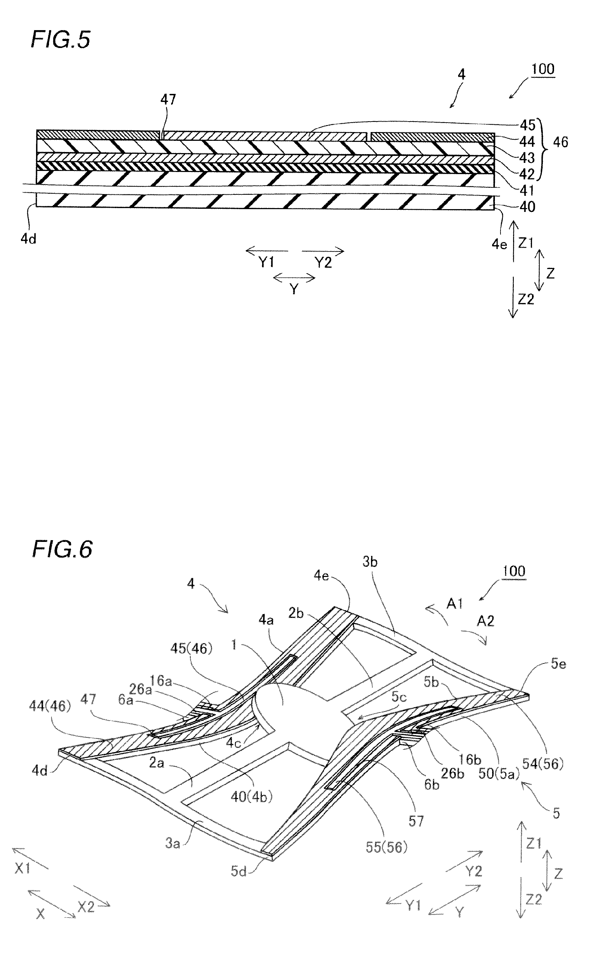

The piezoelectric body layers 43 and 53 are formed on the substantially entire upper surface of the lower electrode 42 and the substantially entire upper surface of the lower electrode 52, respectively. These piezoelectric body layers 43 and 53 both are made of lead zirconate titanate (PZT) and are polarized in the thickness direction (direction Z) to be expanded/contracted in the direction Y (see Fig. 5) when voltages are applied thereto.

The lower electrode 42 and the piezoelectric body layer 43 both are configured to be shared by the drive electrode 44 and the detection electrode 45, and the lower electrode 52 and the piezoelectric body layer 53 both are configured to be shared by the drive electrode 54 and the detection electrode 55.

According to the first embodiment, the drive electrode 44 and the detection electrode 45 are formed in a state separated from each other at a prescribed interval by a separation region 47 on the upper surface (Z1 side) of the piezoelectric body layer 43, as shown in Figs. 3 to 5. In addition, the drive electrode 54 and the detection electrode 55 are formed in a state separated from each other at a prescribed interval by a separation region 57 on the upper surface of the piezoelectric body layer 53. In other words, the drive electrode 44 and the detection electrode 45 are formed in different regions on the upper surface of the piezoelectric body layer 43, and the drive electrode 54 and the detection electrode 55 are formed in different regions on the upper surface of the piezoelectric body layer 53. As a result, the drive electrode 44 and the detection electrode 45 are insulated from each other, and the drive electrode 54 and the detection electrode 55 are insulated from each other.

The drive electrodes 44 and 54 are formed over the substantially entire surfaces of the driving portions 4 and 5, respectively to each have the length L1 in the longitudinal direction (direction Y).

The separation regions 47 and 57 are arranged to surround the outer periphery of the detection electrode 45 and the outer periphery of the detection electrode 55, respectively, and the drive electrodes 44 and 54 are arranged to surround the separation regions 47 and 57, respectively. In other words, the drive electrodes 44 and 54 are arranged to surround the detection electrodes 45 and 55 in a state separated from the outer periphery of the detection electrode 45 and the outer periphery of the detection electrode 55 through the separation regions 47 and 57, respectively.

The drive electrode 44 and the detection electrode 45, and the drive electrode 54 and the detection electrode 55 are formed by patterning the same metal layers of Pt or Cr-Au alloy.

As shown in Fig. 2, the detection electrodes 45 and 55 are formed to extend in the longitudinal direction (direction Y). The detection electrode 45 is formed in the vicinity of the side surface portion 4a near the fixed portion 6a on the opposite side (X1 side) of the driving portion 4 to the mirror portion 1, and the detection electrode 55 is formed in the vicinity of the side surface portion 5a near the fixed portion 6b on the opposite side (X2 side) of the driving portion 5 to the mirror portion 1. Thus, a region occupied by the separation region 47 (57) formed around a wire 26a (26b) described later can be reduced as compared with a case where the detection electrode 45 (55) are formed in a position distanced from the fixed portion 6a (6b) (the vicinity of the side surface portion 4b (5b) of the driving portion 4 (5) on the X2 (Xl) side or the like). Therefore, a region occupied by the drive electrode 44 (54) can be increased and hence reduction in the driving force of the driving portion 4 (5) can be suppressed.

The detection electrodes 45 and 55 each have a substantially rectangular shape in a plan view, a length L2 in the direction Y, and a width W2 in the direction X. The lengths L2 of the detection electrodes 45 and 55 in the direction Y are about half the lengths L1 of the driving portions 4 and 5 in the direction Y. The widths W2 of the detection electrodes 45 and 55 in the direction X are about one-fifth of the widths W1 of the central portion 4c of the driving portion 4 and the central portion 5c of the driving portion 5 in the direction X. The widths W2 of the detection electrodes 45 and 55 in the direction X bear a substantially proportional relationship to the detection sensitivity of the detection electrodes 45 and 55, respectively. The detection electrodes 45 and 55 are formed to be symmetrical in the longitudinal direction (direction Y) about the central portion 4c of the driving portion 4 and the central portion 5c of the driving portion 5, respectively.

As shown in Figs. 3 to 5, nothing is formed on the upper surfaces of the piezoelectric body layers 43 and 53 corresponding to the separation regions 47 and 57.

As shown in Fig. 2, the drive electrode 44 is formed over the substantially entire driving portion 4 except a region formed with the detection electrode 45 and a region reserved for the separation region 47 on the upper surface (Z1 side) of the piezoelectric body layer 43. In addition, the drive electrode 54 is formed over the substantially entire driving portion 5 except a region formed with the detection electrode 55 and a region reserved for the separation region 57 on the upper surface of the piezoelectric body layer 53. In other words, the drive electrodes 44 and 54 are formed over entire regions where the same can be formed on the upper surfaces of the piezoelectric body layers 43 and 53, respectively. Thus, the driving force of the driving portions 4 and 5 (piezoelectric body layers 43 and 53) can be increased as much as possible. The drive electrodes 44 and 54 each have the length L1 in the direction Y, similarly to the driving portions 4 and 5.

The drive electrode 44 is connected with a wire 16a extending from a side closer to the fixed portion 6a, and the drive electrode 54 is connected with a wire 16b extending from a side closer to the fixed portion 6b. The vibrating mirror element 100 is so configured that these wires 16a and 16b are connected to unshown terminals, respectively to electrically connect the drive electrodes 44 and 54 to external portions.

The drive electrodes 44 and 54 are so configured that voltages can be applied thereto to generate differences in potential from the lower electrodes 42 and 52, respectively. Thus, a voltage is applied between the drive electrode 44 and the lower electrode 42, whereby the piezoelectric body layer 43 is deformed, and a voltage is applied between the drive electrode 54 and the lower electrode 52, whereby the piezoelectric body layer 53 is deformed. The detection electrodes 45 and 55 are configured to be deformed following the deformation of the piezoelectric body layers 43 and 53 (driving portions 4 and 5), respectively at this time.

Specifically, the driving portion 4 is configured to be concavely and convexly torsionally-deformable in the direction Z perpendicular to the surfaces of the driving portion 4 extending in the direction X and the direction Y with a fixed end defined by the central portion 4c in the vicinity of the fixed portion 6a and free ends defined by the end portion 4d on the Y1 side and the end portion 4e on the Y2 side when the voltage is applied to the drive electrode 44 and the lower electrode 42 (see Figs. 3 and 4), as shown in Fig. 6. Similarly, the driving portion 5 is configured to be concavely and convexly torsionally-deformable in the direction Z perpendicular to the surfaces of the driving portion 5 extending in the direction X and the direction Y with a fixed end defined by the central portion 5c in the vicinity of the fixed portion 6b and free ends defined by the end portion 5d on the Y1 side and the end portion 5e on the Y2 side when the voltage is applied to the drive electrode 54 and the lower electrode 52 (see Figs. 3 and 4).

The voltages applied to the drive electrodes 44 and 54 and the lower electrodes 42 and 52 mainly have sinusoidal waveforms. Thus, the driving portions 4 and 5 are configured to repeat vibratile movement of being concavely deformed from undeformed states, returning to the undeformed states again, and thereafter being convexly torsionally deformed. The phase of the voltage applied to the drive electrode 44 of the driving portion 4 and the lower electrode 42 and the phase of the voltage applied to the drive electrode 54 of the driving portion 5 and the lower electrode 52 are reverse to each other. Furthermore, the frequencies of the voltages applied to the driving portions 4 and 5 and the resonance frequency of the mirror portion 1, the torsion bars 2a and 2b, and the driving portions 4 and 5 substantially coincide with each other. Thus, the mirror portion 1 and the torsion bars 2a and 2b so resonate by the driving force from the driving portions 4 and 5 that the mirror portion 1 can be vibrated in the directions A1 and A2 (see Fig. 1) at an angle larger than the inclination angle of the bars 3a and 3b. The amounts of deformation of the driving portions 4 and 5 correspond to the vibration angle of the mirror portion 1 in vibratile movement.

The detection electrode 45 is connected with the wire 26a extending from a side closer to the fixed portion 6a, and the detection electrode 55 is connected with the wire 26b extending from a side closer to the fixed portion 6b. The vibrating mirror element 100 is so configured that these wires 26a and 26b are connected to unshown terminals, respectively to electrically connect the detection electrodes 45 and 55 to external terminals (not shown). The separation regions 47 and 57 are also formed around the wire 26a in the driving portion 4 and the wire 26b in the driving portion 5, respectively.

According to the first embodiment, the detection electrode 45 is configured to detect a difference in potential from the lower electrode 42 generated by torsional deformation of the piezoelectric body layer 43, and the detection electrode 55 is configured to detect a difference in potential from the lower electrode 52 generated by torsional deformation of the piezoelectric body layer 53. In other words, the detection electrode 45 is configured to detect the amount of deformation of the driving portion 4 based on the amount of concave and convex torsional-deformation of the piezoelectric body layer 43, and the detection electrode 55 is configured to detect the amount of deformation of the driving portion 5 based on the amount of concave and convex torsional-deformation of the piezoelectric body layer 53. Furthermore, the detection electrode 45 is configured to detect torsional deformation of the driving portion 4 independently of torsional deformation of the driving portion 5, and the detection electrode 55 is configured to detect torsional deformation of the driving portion 5 independently of torsional deformation of the driving portion 4. Thus, the vibration angle of the mirror portion 1 corresponding to the amounts of deformation of the driving portions 4 and 5 can be obtained. The detection electrodes 45 and 55 are configured to be torsionally deformed following deformation of the driving portions 4 and 5, respectively.

In order to increase the driving force of the driving portion 4 (5) as much as possible, it is preferable to form the drive electrode 44 (54) in as large a region as possible in terms of increasing the driving force. On the other hand, it is preferable to form the detection electrode 45 (55) in as small a region as possible in a state of ensuring sufficient detection sensitivity in terms of suppressing reduction in the driving force due to reduction in a region for the drive electrode 44 (54).

According to the first embodiment, as hereinabove described, the drive electrodes 44 and 54 and the detection electrodes 45 and 55 are arranged in the driving portions 4 and 5, respectively, whereby the drive electrodes 44 and 54 and the detection electrodes 45 and 55 can be formed in the same manufacturing process. Thus, it is not necessary to form the drive electrodes 44 and 54 and the detection electrodes 45 and 55 in different manufacturing processes, and hence the vibrating mirror element 100 including the detection electrodes 45 and 55 to detect driving of the driving portions 4 and 5 can be easily manufactured. Furthermore, the detection electrodes 45 and 55 capable of detecting the amounts of deformation of the driving portions 4 and 5 are arranged in the driving portions 4 and 5, whereby the relatively large amounts of deformation of the driving portion 4 itself and the driving portion 5 itself can be detected by the detection electrodes 45 and 55 arranged in the driving portions 4 and 5, respectively. Thus, the amount of displacement (vibration angle) of the mirror portion 1 can be more accurately detected on the basis of the amounts of deformation of the driving portions 4 and 5.

According to the first embodiment, the detection electrodes 45 and 55 are formed to extend in the longitudinal direction (direction Y), whereby the detection electrodes 45 and 55 can easily detect deformation of the driving portions 4 and 5 along the longitudinal direction (direction Y) of the drive electrodes 44 and 54.

According to the first embodiment, the lengths L2 of the detection electrodes 45 and 55 in the direction Y are about half the lengths L1 of the drive electrodes 44 and 54 in the direction Y, whereby areas of the detection electrodes 45 and 55 necessary to detect the amounts of deformation of the detection electrodes 45 and 55 accurately can be ensured, and hence the amounts of deformation of the driving portions 4 and 5 can be accurately detected.

According to the first embodiment, the lengths L2 of the detection electrodes 45 and 55 in the direction Y are about half the lengths L1 of the drive electrodes 44 and 54 in the direction Y, whereby excessive increase in the proportion of the detection electrode 45 in the driving portion 4 can be suppressed, and excessive increase in the proportion of the detection electrode 55 in the driving portion 5 can be suppressed. Thus, reduction in the driving force of the driving portions 4 and 5 caused by reduction in the proportion of the drive electrode 44 in the driving portion 4 and reduction in the proportion of the drive portion 54 in the driving portion 5 can be suppressed.

According to the first embodiment, the drive electrode 44 (54) and the detection electrode 45 (55) are insulated from each other, whereby failure of accurate detection of the amount of deformation of the driving portion 4 (5) by the detection electrode 45 (55) caused by an unexpected short circuit or the like between the drive electrode 44 (54) and the detection electrode 45 (55) can be suppressed.

According to the first embodiment, the detection electrode 45 (55) is configured to be deformed following deformation of the driving portion 4 (5), whereby the detection electrode 45 (55) deformed following the deformation of the driving portion 4 (5) can reliably detect the deformation of the driving portion 4 (5) without impeding the deformation of the driving portion 4 (5).

According to the first embodiment, the detection electrode 45 is formed in the vicinity of the side surface portion 4a near the fixed portion 6a on the opposite side (X1 side) of the driving portion 4 to the mirror portion 1, and the detection electrode 55 is formed in the vicinity of the side surface portion 5a near the fixed portion 6b on the opposite side (X2 side) of the driving portion 5 to the mirror portion 1, whereby the detection electrodes 45 and 55 can be easily connected to the external terminals (not shown) through the vicinities of the side surface portion 4a and the side surface portion 5a opposite to the mirror portion 1, respectively.

According to the first embodiment, the side surface portion 4a of the driving portion 4 on the X1 side is formed to extend linearly along the direction Y, and the side surface portion 5a of the driving portion 5 on the X2 side is formed to extend linearly along the direction Y. In addition, the side surface portion 4b of the driving portion 4 on the X2 side is configured to be continuously inclined to the X1 side from the central portion 4c toward the end portion 4d on the Y1 side and the end portion 4e on the Y2 side, and the side surface portion 5b of the driving portion 5 on the X1 side is configured to be continuously inclined to the X2 side from the central portion 5c toward the end portion 5d on the Y1 side and the end portion 5e on the Y2 side. According to this structure, the width of the driving portion 4 in the short-side direction (direction X) can be gradually reduced from the central portion 4c toward the end portion 4d on the Y1 side and the end portion 4e on the Y2 side by inclining the side surface portion 4b of the driving portion 4 on the X2 side to the X1 side in a state where the length L2 of the detection electrode 45 in the direction Y is not too small. Furthermore, the width of the driving portion 5 in the short-side direction (direction X) can be gradually reduced from the central portion 5c toward the end portion 5d on the Y1 side and the end portion 5e on the Y2 side by inclining the side surface portion 5b of the driving portion 5 on the X1 side to the X2 side in a state where the length L2 of the detection electrode 55 in the direction Y is not too small. Thus, the driving portions 4 and 5 can be reduced in weight by reducing the plane areas of the driving portions 4 and 5 in a state where the lengths of the detection electrodes 45 and 55 are maintained at lengths (dimensions) capable of detecting the amounts of deformation of the driving portions 4 and 5.

According to the first embodiment, the driving portion 4 (5) is configured to be concavely and convexly torsionally-deformable in the direction Z perpendicular to the surfaces of the driving portion 4 (5) extending in the direction X and the direction Y with the fixed end defined by the central portion 4c (5c) in the vicinity of the fixed portion 6a (6b) and the free ends defined by the end portion 4d (5d) on the Y1 side and the end portion 4e (5e) on the Y2 side, whereby the detection electrode 45 (55) can easily detect the amount of deformation of the driving portion 4 (5) based on the concave and convex torsional-deformation.

According to the first embodiment, the drive electrodes 44 and 54 surround the detection electrodes 45 and 55 in the state separated from the outer periphery of the detection electrode 45 and the outer periphery of the detection electrode 55 through the separation regions 47 and 57, respectively, whereby the drive electrode 44 and the detection electrode 45 in a state where contact therebetween is suppressed and the drive electrode 54 and the detection electrode 55 in a state separated from each other can be more easily formed simultaneously through the same manufacturing process in a state where insulation between the drive electrode 44 and the detection electrode 45 and insulation between the drive electrode 54 and the detection electrode 55 are ensured. Thus, the vibrating mirror element 100 can be more easily manufactured. In addition, deformation of the drive electrodes 44 and 54 can be reliably transmitted to the detection electrodes 45 and 55 surrounded by the drive electrodes 44 and 54, respectively while the drive electrodes 44 and 54 are physically insulated from the detection electrodes 45 and 55 along the outer periphery of the detection electrode 45 and the outer periphery of the detection electrode 55, respectively.

According to the first embodiment, the drive electrode 44 and the detection electrode 45, and the drive electrode 54 and the detection electrode 55 are formed by patterning the same metal layers of Pt or Cr-Au alloy, whereby the drive electrode 44 (54) and the detection electrode 45 (55) can be formed in a short time through a single step.

According to the first embodiment, the piezoelectric body layer 43 (53) is configured to be torsionally deformed by applying a voltage between the drive electrode 44 (54) and the lower electrode 42 (52), and the detection electrode 45 (55) is configured to detect the difference in potential from the lower electrode 42 (52) generated by the torsional deformation of the piezoelectric body layer 43 (53), whereby the drive electrode 44 (54) and the detection electrode 45 (55) can share the piezoelectric body layer 43 (53) and the lower electrode 42 (52), and hence it is not necessary to provide piezoelectric body layers and lower electrodes individually in the drive electrode 44 (54) and the detection electrode 45 (55). Thus, the structure of the vibrating mirror element 100 can be simplified, and the vibrating mirror element 100 can be downsized. In addition, manufacturing processes for individually providing piezoelectric body layers and lower electrodes corresponding to the drive electrode 44 (54) and the detection electrode 45 (55), respectively, are not required, and hence the vibrating mirror element 100 can be more easily formed.

According to the first embodiment, the drive electrodes 44 and 54 each have the length L1 in the longitudinal direction (direction Y), and the detection electrodes 45 and 55 each have the length L2 in the direction Y, whereby the amount of deformation of the driving portion 4 and the amount of deformation of the driving portion 5 with respect to the magnitudes of applied voltages can be rendered substantially equal to each other, and the detection accuracy of the detection electrode 45 and the detection accuracy of the detection electrode 55 can be rendered substantially equal to each other. Thus, deformation of the driving portion 4 and deformation of the driving portion 5 can be detected with substantially the same detection accuracies by the detection electrode 45 and the detection electrode 55, respectively while the drive electrodes 44 and 54, the sizes of which are substantially equal to each other, stably drive the mirror portion 1.

According to the first embodiment, the first end portion (Y2 side) of the torsion bar 2a in the direction Y is connected to the mirror portion 1, and the second end portion (Y1 side) thereof in the direction Y is connected to the bar 3a. The first end portion (Y1 side) of the torsion bar 2b in the direction Y is connected to the mirror portion 1, and the second end portion (Y2 side) thereof in the direction Y is connected to the bar 3b. Furthermore, the first end portion (X1 side) of the bar 3a in the direction X is connected to the driving portion 4, and the second end portion (X2 side) thereof in the direction X is connected to the driving portion 5. The first end portion (X1 side) of the bar 3b in the direction X is connected to the driving portion 4, and the second end portion (X2 side) thereof in the direction X is connected to the driving portion 5. In addition, deformation of the driving portions 4 and 5 is transmitted through the bars 3a and 3b and the torsion bars 2a and 2b to incline the mirror portion 1. Thus, the mirror portion 1 can be reliably inclined by the driving portions 4 and 5 through the bars 3a and 3b and the torsion bars 2a and 2b.

According to the first embodiment, the mirror portion 1, the torsion bars 2a and 2b, the bars 3a and 3b, the base portion 40 of the driving portion 4, the base portion 50 of the driving portion 5, and the fixed portions 6a and 6b are integrally formed from the same Si substrate, whereby the mirror portion 1, the torsion bars 2a and 2b, the bars 3a and 3b, the base portion 40 of the driving portion 4, the base portion 50 of the driving portion 5, and the fixed portions 6a and 6b can be easily formed. Furthermore, driving force based on deformation of the driving portions 4 and 5 can be reliably transmitted to the mirror portion 1.

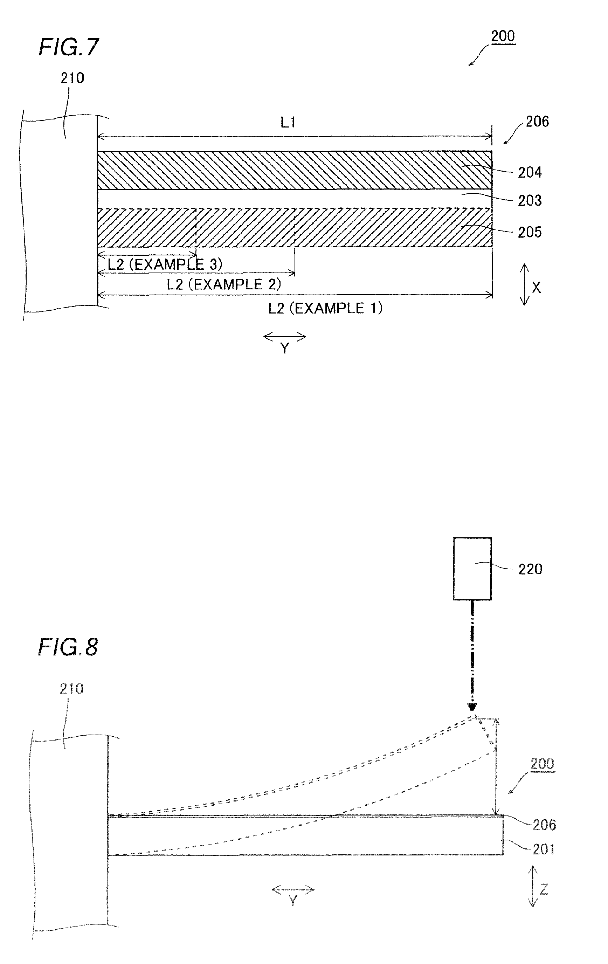

Second, detection sensitivity measurement performed to confirm the effects of the aforementioned first embodiment of the present invention is described with reference to Figs. 7 to 10.

In this detection sensitivity measurement, cantilever-type test members 200 having detection electrodes 205, the lengths L2 of which in a longitudinal direction (direction Y) are different from each other, were employed for measurement as Examples 1, 2, and 3.

Specifically, a first side of each of the test members 200 having a rectangular shape in a plan view was fixed by a fixing member 210 to be a fixed end whereas a second side thereof was unfixed to be a free end, as shown in Fig. 7. The test members 200 each were constituted by a base portion 201, an insulting layer (not shown), and a piezoelectric element 206 including a lower electrode (not shown) formed on the upper surface of the insulating layer, a piezoelectric body layer 203 (see Fig. 7), a drive electrode 204 (see Fig. 7), and the detection electrode 205 (see Fig. 7), as shown in Fig. 8. The length L1 of each of the test members 200 in the longitudinal direction (direction Y) was set at 2 mm (2000 µm).

As shown in Fig. 7, the length in the direction Y of the drive electrode 204 having a rectangular shape in a plan view was set to be equal to the length L1 of each of the test members 200 in the direction Y. Furthermore, the detection electrode 205 having a rectangular shape in a plan view was formed at a prescribed interval from the drive electrode 204. The drive electrode 204 and the detection electrode 205 were so configured that the widths thereof in a short-side direction (direction X) were equal to each other.

In the test member 200 according to Example 1, the length L2 of the detection electrode 205 in the direction Y was set at 2 mm (2000 µm). In other words, the length L2 of the detection electrode 205 in the direction Y was set to be equal to the length L1 of the drive electrode 204 in the direction Y (the length of the test member 200 in the direction Y). In the test member 200 according to Example 2, the length L2 of the detection electrode 205 in the direction Y was set at 1 mm (1000 µm). In other words, the length L2 of the detection electrode 205 in the direction Y was set to be half the length L1 of the drive electrode 204 in the direction Y. The test member 200 according to Example 2 corresponds to the driving portions 4 and 5 according to the aforementioned first embodiment. In the test member 200 according to Example 3, the length L2 of the detection electrode 205 in the direction Y was set at 0.5 mm (500 µm). In other words, the length L2 of the detection electrode 205 in the direction Y was set to be a quarter of the length L1 of the drive electrode 204 in the direction Y.

Then, a voltage was applied to generate a difference in potential between the lower electrode (not shown) and the drive electrode 204 of the test member 200 in each of the aforementioned Examples 1, 2, and 3, and the piezoelectric body layer 203 (test member 200) was deformed to warp in the vertical direction (direction Z), as shown in Fig. 8. At this time, the difference in potential between the lower electrode (not shown) and the detection electrode 205 generated following the deformation of the piezoelectric body layer 203 was detected as a detection voltage.

The amount of deformation of the test member 200 on the free end side was measured with a laser Doppler vibrometer 220 at the same time when the detection voltage was detected. Specifically, a laser beam was applied to the upper surface of the test member 200 on the free end side from the laser Doppler vibrometer 220 arranged above the test member 200 and the reflected light was measured by the laser Doppler vibrometer 220 to obtain the amount of deformation of the test member 200 on the free end side. Then, the magnitude of the detection voltage per the amount of deformation of the piezoelectric body layer 203 on the free end side was obtained as detection sensitivity.

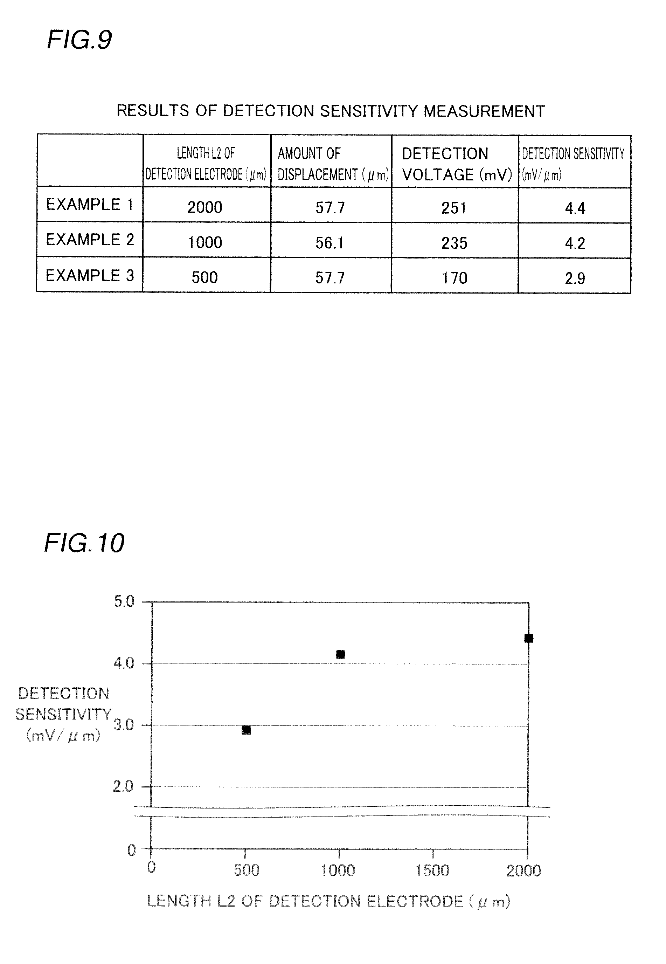

As results of the detection sensitivity measurement, the amount of deformation of the test member 200 on the free end side was 57.7 µm, and the detection voltage was 251 mV in Example 1, as shown in Fig. 9. Thus, the detection sensitivity in Example 1 was 4.4 (= 251/57.7) (mV/µm). In Example 2, the amount of deformation of the test member 200 on the free end side was 56.1 µm, and the detection voltage was 235 mV. Thus, the detection sensitivity in Example 2 was 4.2 (= 235/56.1) (mV/µm). In Example 3, the amount of deformation of the test member 200 on the free end side was 57.7 µm, and the detection voltage was 170 mV. Thus, the detection sensitivity in Example 3 was 2.9 (= 170/57.7) (mV/µm).

It has been proved from the aforementioned results of the detection sensitivity measurement that the detection sensitivity can be increased by increasing the length L2 of the detection electrode 205 in the direction Y, as shown in Fig. 10.

Whereas the detection sensitivity was larger than 4 mV/µm in Examples 1 and 2, the detection sensitivity was smaller than 3 mV/µm in Example 3. Thus, in Example 3, the detection sensitivity is small, whereby the test member 200 is conceivably susceptible to noise caused by an unnecessary difference in potential in an unshown electrical circuit or the like connected with the detection electrode 205. In other words, it is conceivably difficult to accurately detect the amount of deformation of the driving portion in Example 3. On the other hand, in Examples 1 and 2, the detection sensitivity is large, whereby the test members 200 are not susceptible to noise, and hence it is conceivably possible to detect the amount of deformation of the driving portions more accurately than in Example 3. Thus, Examples 1 and 2 are conceivably preferable to Example 3 in order to attain the effect of the present invention of ensuring sufficient detection sensitivity.

In addition, it has been proved that the length L2 of the detection electrode 205 bears a logarithmic relationship to the detection sensitivity. In other words, it has been proved that the detection sensitivity is not increased much even if the lengths L2 of the detection electrodes 205 are increased in cases of Examples 1 and 2 where the lengths L2 of the detection electrodes 205 in the direction Y are at least half the lengths L1 of the test members 200 in the direction Y (the lengths of the drive electrodes 204 in the direction Y). The inventors have found from this that sufficient detection sensitivity can be ensured even in a case where the length L2 of the detection electrode 205 in the direction Y is half the length L1 of the test member 200 in the direction Y (the length of the drive electrode 204 in the direction Y).

In order to increase the driving force of the driving portions 4 and 5 of the vibrating mirror element 100 according to the first embodiment as much as possible, it is necessary to form the drive electrode 204 in as large a region as possible. Therefore, it is preferable to form the detection electrode 205 in as small a region as possible in a state of ensuring sufficient detection sensitivity. Thus, it has been proved that Example 2 (the length L2 of the detection electrode 205 is half the length L1 of the drive electrode 204) capable of ensuring sufficient detection sensitivity while increasing the driving force is preferable to Example 1 (the length L2 of the detection electrode 205 is equal to the length L1 of the drive electrode 204) since the detection electrode 205 according to Example 2 is formed in a smaller region.

Therefore, the test member 200 according to Example 2 corresponding to the driving portions 4 and 5 according to the first embodiment of the present invention conceivably has the most effective structure in order to ensure sufficient detection sensitivity while increasing the driving force.

### (Second Embodiment)

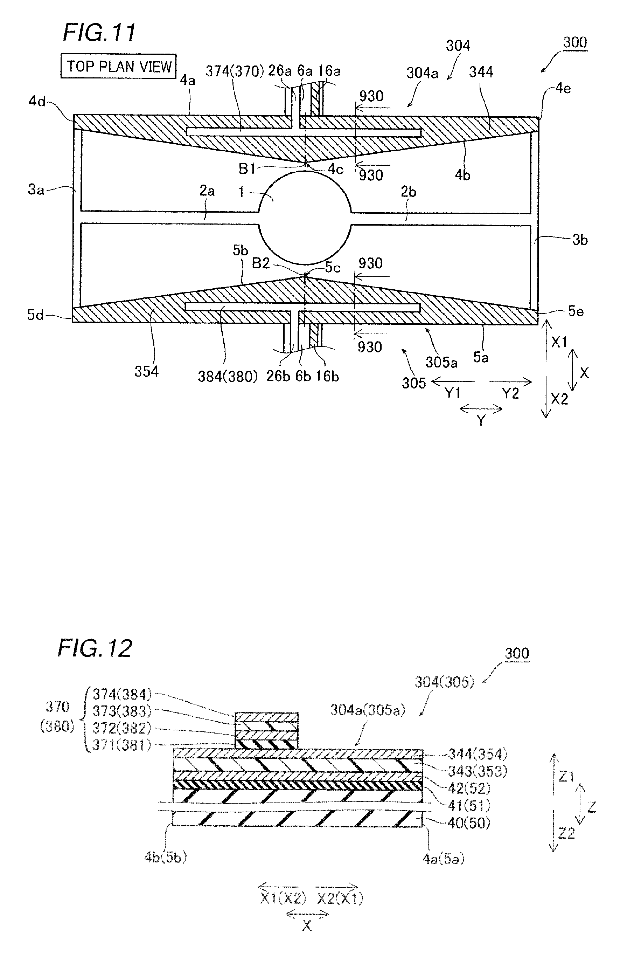

The structure of a vibrating mirror element 300 according to a second embodiment of the present invention is now described with reference to Figs. 11 and 12. An example of forming drive electrodes 344 and 354 over substantially entire surfaces of driving sections 304a and 305a, respectively and forming a detecting section 370 including a detection electrode 374 and a detecting section 380 including a detection electrode 384 on the upper surfaces of the drive electrodes 344 and 354, respectively is described in this second embodiment, dissimilarly to the aforementioned first embodiment.

Driving portions 304 and 305 of the vibrating mirror element 300 according to the second embodiment include the driving sections 304a and 305a and the detecting sections 370 and 380, respectively, as shown in Figs. 11 and 12. The driving section 304a includes a base portion 40, an insulating layer 41, a lower electrode 42, a piezoelectric body layer 343, and the drive electrode 344, as shown in Fig. 12. Furthermore, the driving section 305a includes a base portion 50, an insulating layer 51, a lower electrode 52, a piezoelectric body layer 353, and the drive electrode 354. As shown in Fig. 11, the drive electrodes 344 and 354 are formed on the substantially entire upper surfaces (Z1 sides) of the piezoelectric body layers 343 and 353 (see Fig. 12), respectively. The driving portions 304 and 305 are examples of the "first driving portion" and the "second driving portion" in the present invention, respectively, and the piezoelectric body layers 343 and 353 are examples of the "drive piezoelectric body" in the present invention. The drive electrodes 344 and 354 are examples of the "first drive electrode" and the "second drive electrode" in the present invention, respectively.

According to the second embodiment, the rectangular detecting sections 370 and 380 are formed on the upper surfaces of the drive electrodes 344 and 354, respectively to extend in a longitudinal direction (direction Y). In these detecting sections 370 and 380, insulating layers 371 and 381, lower electrodes 372 and 382, piezoelectric body layers 373 and 383, and the detection electrodes 374 and 384, respectively, are stacked in this order from below (Z2 side) upward (Z1 side), as shown in Fig. 12. In other words, the drive electrode 344 and the detection electrode 374 are configured not to share a lower electrode and a piezoelectric body layer, and the drive electrode 354 and the detection electrode 384 are configured not to share a lower electrode and a piezoelectric body layer, dissimilarly to the first embodiment. The detection electrodes 374 and 384 are examples of the "first detection electrode" and the "second detection electrode" in the present invention, respectively.

The insulating layers 371 and 381 both are made of polyimide. The insulating layer 371 is arranged to insulate the drive electrode 344 and the lower electrode 372 from each other, and the insulating layer 381 is arranged to insulate the drive electrode 354 and the lower electrode 382 from each other. The lower electrodes 372 and 382 both are made of Pt and are electrically connected to external portions by unshown terminals, respectively. The piezoelectric body layers 373 and 383 both are made of lead zirconate titanate (PZT). The piezoelectric body layers 373 and 383 are examples of the "detection piezoelectric body" in the present invention.

The detection electrodes 374 and 384 are formed on substantially entire regions on the upper surfaces (Z1 side) of the piezoelectric body layers 373 and 383, respectively. In addition, the detection electrodes 374 and 384 both are made of Pt or Cr-Au alloy.

The drive electrode 344 and the detection electrode 374 are formed to be substantially symmetrical in the longitudinal direction (direction Y) about a straight line B1 passing through a central portion 4c of the driving portion 304 and extending in a direction X. Similarly, the drive electrode 354 and the detection electrode 384 are formed to be substantially symmetrical in the longitudinal direction (direction Y) about a straight line B2 passing through a central portion 5c of the driving portion 405 and extending in the direction X.

The detecting sections 370 and 380 are configured to be deformed following torsional deformation of the driving portions 304 and 305, respectively when voltages are applied to the drive electrodes 344 and 354 to torsionally deform the piezoelectric body layers 343 and 353 (driving portions 304 and 305). Thus, the detection electrode 374 is configured to detect a difference in potential from the lower electrode 372 generated by the torsional deformation of the piezoelectric body layer 373, and the detection electrode 384 is configured to detect a difference in potential from the lower electrode 382 generated by the torsional deformation of the piezoelectric body layer 383.

The remaining structure of the second embodiment is similar to that of the aforementioned first embodiment.

According to the second embodiment, as hereinabove described, the detection electrode 374 (384) is configured to detect the difference in potential from the lower electrode 372 (382) generated by the torsional deformation of the piezoelectric body layer 373 (383) when a voltage is applied from the drive electrode 344 (354) to torsionally deform the piezoelectric body layer 343 (353), whereby the piezoelectric body layer 343 (353) corresponding to the drive electrode 344 (354) and the piezoelectric body layer 373 (383) corresponding to the detection electrode 374 (384) can be separated from each other, dissimilarly to a case where the drive electrode and the detection electrode share one piezoelectric body. Thus, the piezoelectric body layer 343 (353) and the drive electrode 344 (354) can be easily sized to be capable of generating prescribed driving power. Furthermore, the piezoelectric body layer 373 (383) and the detection electrode 374 (384) can be easily sized to be capable of accurately detecting the amount of deformation of the driving portion 304 (305).

According to the second embodiment, the drive electrode 344 (354) is formed over the substantially entire upper surface of the piezoelectric body layer 343 (353), and the detection electrode 374 (384) is formed over the substantially entire region, on the upper surface of the piezoelectric body layer 373 (383), whereby a voltage is applied to the substantially entire region of the piezoelectric body layer 343 (353) from the drive electrode 344 (354) formed over the substantially entire upper surface of the piezoelectric body layer 343 (353), so that the piezoelectric body layer 343 (353) can be effectively deformed. Thus, reduction in the driving force of the driving portion 304 (305) can be further suppressed. In addition, the detection electrode 374 (384) formed over the substantially entire region on the upper surface of the piezoelectric body layer 373 (383) can accurately detect the amount of deformation of the driving portion 304 (305) on the basis of a substantially entire deformed portion of the driving portion 304 (305).

According to the second embodiment, the drive electrode 344 and the detection electrode 374 are formed to be substantially symmetrical in the longitudinal direction (direction Y) about the straight line B1 passing through the central portion 4c of the driving portion 304 and extending in the direction X, and the drive electrode 354 and the detection electrode 384 are formed to be substantially symmetrical in the longitudinal direction (direction Y) about the straight line B2 passing through the central portion 5c of the driving portion 405 and extending in the direction X, whereby the drive electrodes 344 and 354 formed to be substantially symmetrical about the straight lines B1 and B2 can deform the driving portions 304 and 305 to be substantially symmetrical about the straight lines B1 and B2. Furthermore, the detection electrodes 375 and 384 formed to be substantially symmetrical about the straight lines B1 and B2 can more accurately detect the amounts of deformation of the driving portions 304 and 305.

According to the second embodiment, the driving portions 304 and 305 include the driving sections 304a and 305a and the detecting sections 370 and 380, respectively, and the rectangular detecting sections 370 and 380 are formed on the upper surfaces of the drive electrodes 344 and 354, respectively to extend in the longitudinal direction (direction Y), whereby the detecting sections 370 and 380 arranged on surfaces of the driving sections 304a and 305a can easily detect deformation of the driving sections 304a and 305a.

The remaining effects of the second embodiment are similar to those of the aforementioned first embodiment.

### (Third Embodiment)

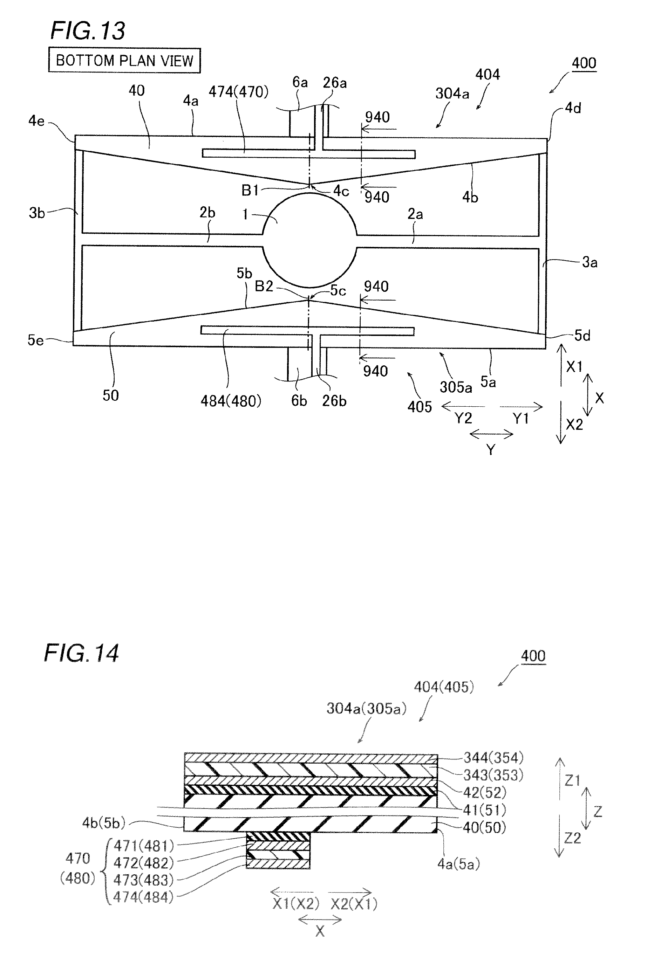

The structure of a vibrating mirror element 400 according to a third embodiment of the present invention is now described with reference to Figs. 13 and 14. An example of forming a detecting section 470 including a detection electrode 474 on the lower surface of a base portion 40 of a driving section 304a and forming a detecting section 480 including a detection electrode 484 on the lower surface of a base portion 50 of a driving section 305a is described in this third embodiment, dissimilarly to the aforementioned second embodiment.

Driving portions 404 and 405 of the vibrating mirror element 400 according to the third embodiment include the driving sections 304a and 305a and the detecting sections 470 and 480, respectively, as shown in Figs. 13 and 14. The rectangular detecting sections 470 and 480 are formed on the lower surfaces (Z2 side) of the base portions 40 and 50, respectively to extend in a longitudinal direction (direction Y). In these detecting sections 470 and 480, insulating layers 471 and 481, lower electrodes 472 and 482, piezoelectric body layers 473 and 483, and the detection electrodes 474 and 484, respectively, are stacked in this order from above (Z1 side) downward (Z2 side), as shown in Fig. 14. The insulating layers 471 and 481 both are made of SiO₂. The driving portions 404 and 405 are examples of the "first driving portion" and the "second driving portion" in the present invention, respectively, and the piezoelectric body layers 473 and 483 are examples of the "detection piezoelectric body" in the present invention. The detection electrodes 474 and 484 are examples of the "first detection electrode" and the "second detection electrode" in the present invention, respectively.

The remaining structure and effects of the third embodiment are similar to those of the aforementioned second embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

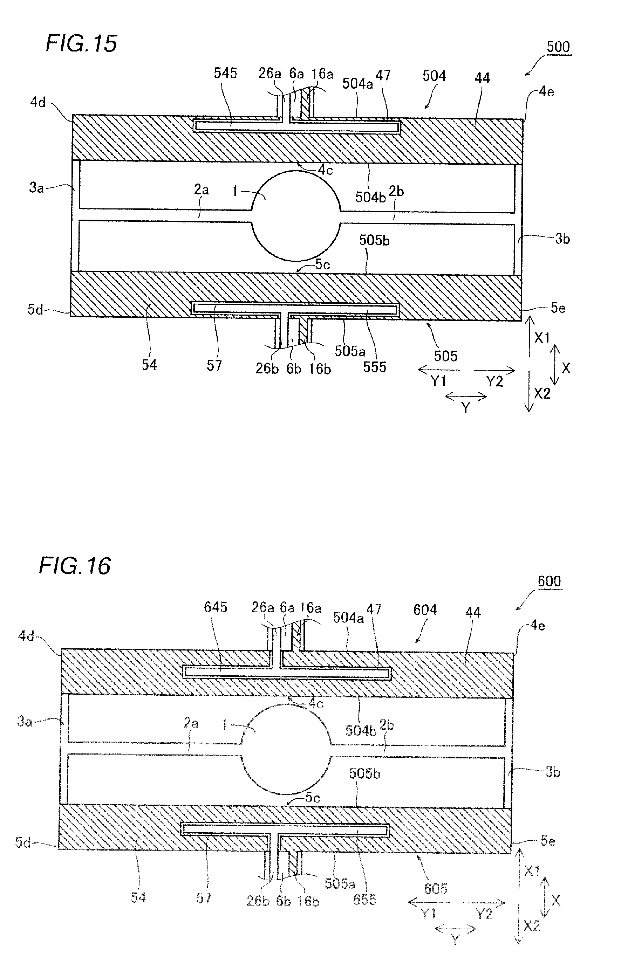

For example, while the example of continuously reducing the width of the driving portion 4 (5) from the center portion 4c (5c) toward the end portions 4d (5d) and 4e (5e) has been shown in the aforementioned first embodiment, the present invention is not restricted to this. According to the present invention, driving portions 504 and 505 each may be configured to have a rectangular shape in a plan view as in a vibrating mirror element 500 according to a first modification shown in Fig. 15.

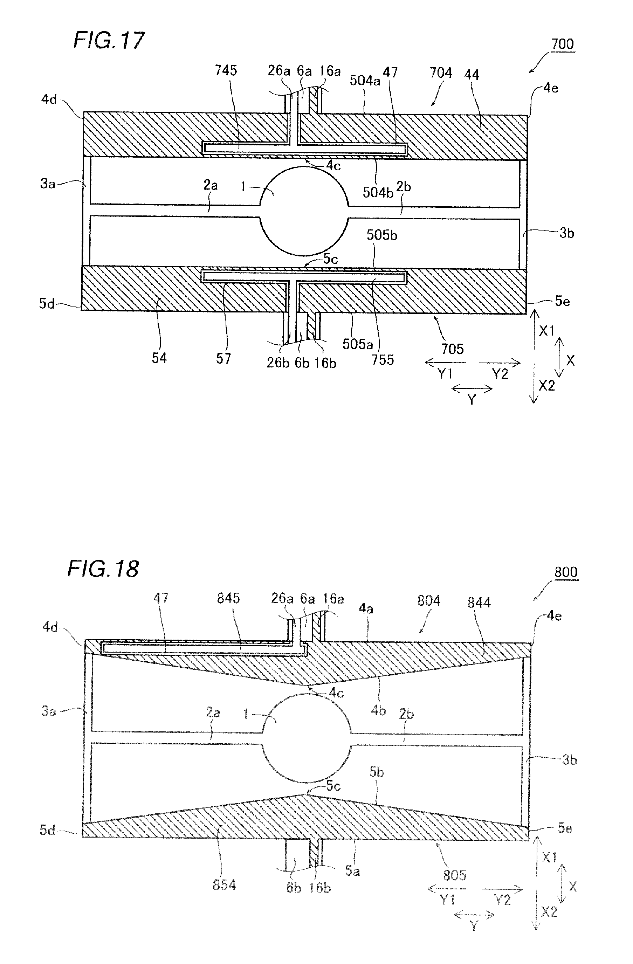

While the example of forming the detection electrode 45 (545) in the vicinity of the side surface portion 4a (504a) near the fixed portion 6a on a first end portion side (X1 side) of the driving portion 4 (504) and forming the detection electrode 55 (555) in the vicinity of the side surface portion 5a (505a) near the fixed portion 6b on a second end portion side (X2 side) of the driving portion 5 (505) has been shown in each of the aforementioned first embodiment and first modification, the present invention is not restricted to this.
According to the present invention, detection electrodes 645 and 655 may be formed nearly in the centers of driving portions 604 and 605 in a short-side direction (direction X), respectively to extend in a longitudinal direction (direction Y) as in a vibrating mirror element 600 according to a second modification shown in Fig. 16. Alternatively, a detection electrode 745 may be formed in the vicinity of a side surface portion 504b far from a fixed portion 6a on the X2 side of a driving portion 704 to extend in a direction Y, and a detection electrode 755 may be formed in the vicinity of a side surface portion 505b far from a fixed portion 6b on the X1 side of a driving portion 705 to extend in the direction Y as in a vibrating mirror element 700 according to a third modification shown in Fig. 17.

While the example of forming the detection electrodes 45 and 55 to be symmetrical in the longitudinal direction (direction Y) about the central portion 4c of the driving portion 4 and the central portion 5c of the driving portion 5, respectively, has been shown in the aforementioned first embodiment, the present invention is not restricted to this. According to the present invention, a detection electrode 845 may be provided in a driving portion 804, and no detection electrode may be provided in a driving portion 805 as in a vibrating mirror element 800 according to a fourth modification shown in Fig. 18. Furthermore, the detection electrode 845 may be provided only on a first side (Y1 side) of the driving portion 804 in a direction Y, and no detection electrode 845 may be provided on a second side (Y2 side) thereof.

While the example of setting the lengths L2 of the detection electrodes 45 and 55 in the longitudinal direction (direction Y) to be about half the lengths L1 of the drive electrodes 44 and 54 in the direction Y has been shown in the aforementioned first embodiment, the present invention is not restricted to this. According to the present invention, the lengths of the detection electrodes in the longitudinal direction may be less than half the lengths of the drive electrodes in the longitudinal direction, or more than about half the lengths of the drive electrodes in the longitudinal direction. It is preferable to set the lengths of the detection electrodes in the longitudinal direction to be at least half the lengths of the drive electrodes in the longitudinal direction and less than the lengths of the drive electrodes in the longitudinal direction in order to ensure sufficient detection sensitivity.

While the example of providing the driving portions 4 (304, 404) and 5 (305, 405) on both sides of the mirror portion 1 in the short-side direction (direction X) has been shown in each of the aforementioned first to third embodiments, the present invention is not restricted to this. According to the present invention, a driving portion may be provided only on one side of the mirror portion in the direction X.

While the example of forming the lower electrode 42 (52) arranged on the lower surface of the piezoelectric body layer 43 (53) over the substantially entire surface of the driving portion 4 (5) and dividing the electrode arranged on the upper surface of the piezoelectric body layer 43 (53) into the drive electrode 44 (54) and the detection electrode 45 (55) has been shown in the aforementioned first embodiment, the present invention is not restricted to this. According to the present invention, the electrode arranged on the upper surface of the piezoelectric body layer may be formed over the substantially entire surface of the driving portion, and the electrode arranged on the lower surface of the piezoelectric body layer may be divided into the drive electrode and the detection electrode.

While the example of inclining the mirror portion 1 of the vibrating mirror element 100 (300, 400) only in the directions A1 and A2 (one-dimensionally) has been shown in each of the aforementioned first to third embodiments, the present invention is not restricted to this. According to the present invention, a driving portion capable of inclining and vibrating the mirror portion in a direction different from the directions A1 and A2 may be provided outside the vibrating mirror element. Thus, the mirror portion can be inclined and vibrated two-dimensionally.

While the examples of making the piezoelectric body layers 43, 53, 343, 353, 373, 383, 473, and 483 of lead zirconate titanate (PZT) have been shown in the aforementioned first to third embodiments, the present invention is not restricted to this. According to the present invention, the piezoelectric body layers may be made of a piezoelectric material, other than PZT, consisting of an oxide mainly composed of lead, titanium, and zirconium or another piezoelectric material. For example, as the piezoelectric body layers, a piezoelectric material such as zinc oxide (ZnO), lead lanthanate zirconate titanate ((Pb,La)(Zr,Ti)O₃), potassium niobate (KNbO₃), or sodium niobate (NaNbO₃) may be employed.

## Claims

1. A vibrating mirror element (100, 300, 400) comprising:
a mirror portion (1); and
a driving portion (4, 5, 304, 305, 404, 405) driving the mirror portion, wherein
the driving portion has a drive electrode (44, 54, 344, 354) to deform the driving portion by application of a voltage to drive the driving portion and a detection electrode (45, 55, 374, 384, 474, 484) to detect an amount of deformation of the driving portion, both arranged therein.

2. The vibrating mirror element according to claim 1, wherein
the detection electrode is formed to extend along a longitudinal direction of the drive electrode.

3. The vibrating mirror element according to claim 2, wherein
a length of the detection electrode in the longitudinal direction is at least half a length of the drive electrode in the longitudinal direction.

4. The vibrating mirror element according to claim 2, wherein
a length of the detection electrode in the longitudinal direction is less than a length of the drive electrode in the longitudinal direction.

5. The vibrating mirror element according to claim 1, wherein
the drive electrode and the detection electrode are arranged in a state insulated from each other.

6. The vibrating mirror element according to claim 1, wherein
the detection electrode is configured to be deformed following deformation of the driving portion.

7. The vibrating mirror element according to claim 1, wherein
the detection electrode is arranged in a vicinity of a first side surface (4a, 5a) of the driving portion opposite to the mirror portion.

8. The vibrating mirror element according to claim 7, wherein
the driving portion is formed to extend linearly along a longitudinal direction of the driving portion on the first side surface and is configured to be inclined to a side of the first side surface from a center (4c, 5c) of the driving portion in the longitudinal direction toward both end portions (4d, 4e, 5d, 5e) thereof on a second side surface (4b, 5b) of the driving portion on a side of the mirror portion, and
the detection electrode is formed to extend linearly along the longitudinal direction of the driving portion.

9. The vibrating mirror element (300, 400) according to claim 1, wherein
the detection electrode (374, 384, 474, 484) extends along a longitudinal direction of the drive electrode (344, 354), and
the drive electrode and the detection electrode both are formed to be substantially symmetrical about a straight line (B1, B2) passing through a center in the longitudinal direction and extending in a short-side direction.

10. The vibrating mirror element according to claim 1, wherein
the driving portion includes a fixed end (4c, 5c) located nearly in a center of the driving portion in a longitudinal direction and a pair of free ends (4d, 4e, 5d, 5e) located in both end portions of the driving portion in the longitudinal direction,
the driving portion is configured to be concavely and convexly torsionally-deformable so that the pair of free ends are displaced in a direction perpendicular to a surface of the driving portion with respect to the fixed end, and
the detection electrode is configured to detect an amount of deformation of the driving portion based on concave and convex torsional-deformation of the driving portion.

11. The vibrating mirror element (100) according to claim 1, wherein
the drive electrode (44, 54) and the detection electrode (45, 55) are coplanar.

12. The vibrating mirror element according to claim 11, wherein
the drive electrode and the detection electrode are formed by patterning a same metal layer.

13. The vibrating mirror element according to claim 11, wherein
the drive electrode is arranged to surround a circumference of the detection electrode in a state separated from an outer periphery of the detection electrode.

14. The vibrating mirror element according to claim 11, wherein
the driving portion (4, 5) includes a common piezoelectric body (43, 53) and a common electrode (42, 52) arranged on a first surface of the common piezoelectric body,
the drive electrode is arranged in a first region on a second surface of the common piezoelectric body, and the detection electrode is arranged in a second region different from the first region on the second surface of the common piezoelectric body,
the driving portion is so configure that the common piezoelectric body is deformed by applying a voltage between the common electrode and the drive electrode, and
the detection electrode is configured to detect a difference in potential from the common electrode generated by deformation of the common piezoelectric body.

15. The vibrating mirror element (300, 400) according to claim 1, wherein
the driving portion (304, 305, 404, 405) includes a drive piezoelectric body (343, 353) deformed by applying a voltage to the drive electrode and a detection piezoelectric body (373, 383, 473, 483) deformed following deformation of the drive piezoelectric body, and
the detection electrode is configured to detect a voltage generated by deformation of the detection piezoelectric body.

16. The vibrating mirror element according to claim 15, wherein
the drive electrode is arranged over a substantially entire region of a surface of the drive piezoelectric body, and
the detection electrode is arranged over a substantially entire region of a surface of the detection piezoelectric body.

17. The vibrating mirror element according to claim 15, wherein
the driving portion is provided with a driving section (304a, 305a) having the drive piezoelectric body and the drive electrode and a detecting section (370, 380, 470, 480) having the detection piezoelectric body and the detection electrode, and
the detecting section is arranged on a surface of the driving section.

18. The vibrating mirror element according to claim 1, wherein
the driving portion includes a first driving portion (4, 304, 404) where a first drive electrode (44, 344) and a first detection electrode (45, 374, 474) are arranged and a second driving portion (5, 305, 405) where a second drive electrode (54, 354) and a second detection electrode (55, 384, 484) are arranged, and
the first drive electrode and the second drive electrode are configured to have lengths substantially equal to each other in a longitudinal direction, and the first detection electrode and the second detection electrode are configured to have lengths substantially equal to each other in the longitudinal direction.

19. The vibrating mirror element according to claim 18, further comprising:
a pair of first beam portions (2a, 2b) having first end portions connected to both sides of the mirror portion, respectively and supporting the mirror portion; and
a pair of second beam portions (3a, 3b) connected tc second end portions of the pair of first beam portions, respectively and having first ends connected to the first driving portion and second ends connected to the second driving portion, wherein
deformation of the first driving portion and the second driving portion is transmitted through the pair of first beam portions and the pair of second beam portions to incline the mirror portion.

20. The vibrating mirror element according to claim 1, wherein
the mirror portion and the driving portion are integrally formed.
